# EUROPÄISCHE PATENTSCHRIFT

(11) **EP 3 319 726 B1**
(45) Veröffentlichungstag und Bekanntmachung des Hinweises auf die Patenterteilung: **11.09.2019**
(21) Anmeldenummer: 16736090.8
(22) Anmeldetag: 05.07.2016
(51) Int. Cl.: B01J 41/07, B01J 41/14, B01J 47/016, G21F 9/12, C02F 1/42, C02F 101/10, C02F 103/02

(54) **CAESIUM SELEKTIVE HARZE**
CESIUM-SELECTIVE RESINS
RESINE DE CESIUM SELECTIVE

(30) Priorität: 06.07.2015 EP 15175385
(43) Veröffentlichungstag der Anmeldung: 16.05.2018
(73) Patentinhaber: LANXESS Deutschland GmbH, 50569 Köln (DE)
(72) Erfinder: KOOP, Bernd, 50668 Köln (DE); KLIPPER, Reinhold, 50933 Köln (DE); NEUMANN, Stefan, 51375 Leverkusen (DE); VANHOORNE, Pierre, 40789 Monheim (DE); BARBIER, Jenny, 50679 Köln (DE); YANG, Tian,Lei, Shanghai 200125 (CN)
(86) Internationale Anmeldenummer: PCT/EP2016/065841
(87) Internationale Veröffentlichungsnummer: WO 2017/005741

(56) Entgegenhaltungen:
- WO-A2-2007/101584
- US-A- 5 601 722
- Koichi Tanihara: "Preparation of Insoluble Hexacyanoferrate(II)-Macroporous Ion Exchange Resin Composites and Comparison of Their Performance as a Regenerable Ion Exchanger for Cesium", Nippon Kagaku Kaishi, 6. März 1996 (1996-03-06), Seiten 835-841, XP055241540, Japan DOI: http://doi.org/10.1246/nikkashi.1996.835 Gefunden im Internet: URL:https://www.jstage.jst.go.jp/article/n ikkashi1972/1996/9/1996_9_835/_pdf [gefunden am 2016-01-14]
- Anonymous: "Amberlite IRA96", , 1. Januar 2014 (2014-01-01), Seiten 1-2, XP055241556, Gefunden im Internet: URL:http://www.desal.co.uk/pdfs/Resin/Ambe rlite_IRA96.pdf [gefunden am 2016-01-14]

## Beschreibung

Die Erfindung betrifft Ionenaustauscher, die mit Cobalthexacyanoferratkomplexen beladen sind, Verfahren zu deren Herstellung und die Verwendung dieser Ionenaustauscher zur Entfernung und Aufreinigung von Caesiumionen.

Die selektive Abtrennung oder Aufreinigung von Caesium ist zum Zwecke der Herstellung desselbigen, aber ebenfalls zur Reinigung von wässrigen Lösungen, ein industrielles Thema. Insbesondere im Kühlwasser von Kernkraftwerken, aber auch bei Reaktorunfällen, fallen häufig große Mengen mit radioaktiven Isotopen des Caesiums kontaminiertes Wasser an, die entfernt werden müssen, bevor dieses Wasser wieder der Umwelt zugeführt werden darf.

Zur Entfernung oder Anreicherung von Caesium gibt es unterschiedliche Verfahren. So beschreibt die EP-A 0909447 die Herstellung eines granularen Cobalthexacyanoferrat-Komplexes mit dem radioaktives Caesium im Säulenverfahren aus wässrigen Lösungen entfernt werden kann. Nachteilig an diesem Verfahren ist, dass der gebildete Cobalthexacyanoferrat-Komplex nicht abriebfest ist und die Säulenabläufe verstopft.

Aus Nuclear Engineering and Technology, 2008, Vol. 40, No. 6, p.489 - 496, Journal of Nuclear Materials, 2009, Vol. 384, p.146-152 und Journal of Hazardous Materials, 2009, Vol. 166, p.1148-1153 ist bekannt, dass stark basische Anionenaustauscher mit quartären Ammoniumgruppen, die zunächst mit Kaliumhexacyanoferrat und dann mit Cobalt - oder Nickelnitratlösungen in Kontakt gebracht werden für die Caesiumadsorption geeignet sind. Nachteilig an diesen beladenen, stark basischen Anionenaustauschern ist, dass diese Ionenaustauscher nicht effizient sind und keine zufriedenstellende Kapazität für Caesiumionen erreicht werden kann.

Kompositionenaustauscher auf Basis von Polyacrylnitril unter Verwendung von Ammoniummolybdophosphat sind aus Journal of Radioanalytical and Nuclear Chemistry, 1990, Vol. 140, p.15-21 oder Journal of Radioanalytical and Nuclear Chemistry, 2013, Vol. 296, p. 369-374 bekannt. Diese Kompositionenaustauscher sind hydrophober als Ionenaustauscher auf Basis funktionalisierter Polystyrolcopolymere und haben dadurch eine langsamere Kinetik.

Das Dokument von Koichi Tanihara: "Preparation of Insoluble Hexacyanoferrate(II)-Macroporous Ion Exchange Resin Composites and Comparison of Their Performance as a Regenerable Ion Exchanger for Cesium", Nippon Kagaku Kaishi, 6. März 1996 (1996-03-06), No. 9, Seiten 835-841 offenbart Ionenaustauscher auf Basis von verschiedenen stark basischen oder schwach basischen Anionenaustauschern, die mit verschiedenen Übergangsmetalhexacyanoferratkomplexen in Kontakt gebracht werden. Die hergestellten Ionenaustauscher eignen sich zur Entfernung von Caesiumionen aus Flüssigkeiten.

Es bestand daher die Aufgabe Ionenaustauscher zur Adsorption von Caesium bereitzustellen, mit dem die Nachteile des Standes der Technik überwunden werden können.

Überraschend wurde gefunden, dass spezielle Ionenaustauscher, insbesondere schwach basische Anionenaustauscher auf Basis von Polystyrol Copolymeren, die mit einem Cobalthexacyanoferratkomplex beladen wurden, Caesiumionen in hohen Mengen adsorbieren.

Gegenstand der Erfindung sind daher Ionenaustauscher, enthaltend Polymer mit funktionellen Gruppen der Formel (I) 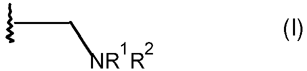
wobei 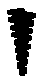 ein Polystyrol-Copolymergerüst darstellt und
R¹ und R² gleich oder verschieden sein können und unabhängig voneinander für C₁-C₆-Alkyl oder H stehen
und zumindest einen Cobalthexacyanoferratkomplex.

R¹ und R² können gleich oder verschieden sein und stehen unabhängig voneinander bevorzugt für Methyl, Ethyl und Wasserstoff. Besonders bevorzugt stehen R¹ und R² unabhängig voneinander für Methyl und Ethyl. Ganz besonders bevorzugt stehen R¹ und R² für Methyl.

Als Polystyrolcopolymere werden beispielsweise und vorzugsweise Copolymere aus Styrol, Vinyltoluol, Ethylstyrol, α-Methylstyrol, Chlorstyrol, oder Chlormethylstyrol und Mischungen dieser Monomere mit polyvinylaromatischen Verbindungen (Vernetzern), wie beispielsweise und vorzugsweise Divinylbenzol, Divinyltoluol, Trivinylbenzol, Divinylnaphtalin oder Trivinylnaphtalin, eingesetzt.

Besonders bevorzugt wird als Polystyrol-Copolymergerüst ein Styrol/Divinylbenzol vernetztes Copolymer eingesetzt.

In dem Polystyrol-Copolymergerüst ist die -CH₂-NR₁R₂ -Gruppe an einem Phenylrest gebunden.

Bevorzugt weisen die erfindungsgemäßen lonenaustauscher eine makroporöse Struktur auf.

Die Begriffe mikroporös oder gelförmig bzw. makroporös sind in der Fachliteratur bereits, beispielsweise in Seidl, Malinsky, Dusek, Heitz, Adv. Polymer Sci., 1967, Vol. 5, S. 113 bis 213, eingehend beschrieben worden. Dort werden ebenfalls die möglichen Messmethoden zur Makroporosität, z.B. Quecksilberporosimetrie und BET Bestimmung, beschrieben. Im Allgemeinen und vorzugsweise weisen die Poren der makroporösen Perlpolymerisate der erfindungsgemäßen Ionenaustauscher einen Durchmesser von 20 nm bis 100 nm auf.

Bevorzugt weisen die erfindungsgemäßen Ionenaustauscher eine monodisperse Verteilung auf.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von +/- 10 % des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Erfindungsgemäß wird Cobalt als Übergangsmetall benutzt, insbesondere als zweiwertiges Cobaltkation. Als Alkalimetall- und Ammoniumhexacyanoferrate können beispielsweise Alkalimetall- und Ammoniumhexacyanoferrate (II) und (III) und auch Mischungen verschiedener Alkalimetallhexacyanoferrate (II) und (III) und/oder Ammoniumhexacyanoferrate (II) und (III) eingesetzt werden. Beispielsweise und vorzugsweise sind als Alkalimetall- und Ammoniumhexacyanoferrate genannt K₃[Fe(CN)₆], K₄[Fe(CN)₆], Na₃[Fe(CN)₆], Na₄[Fe(CN)₆], Na₂K₂[Fe(CN)₆], Li₃[Fe(CN)₆], Li₄[Fe(CN)₆], Li₂(NH₄)₂[Fe(CN)₆] Na₃K[Fe(CN)₆], (NH₄)₃[Fe(CN)₆], (NH₄)₄[Fe(CN)₆], NaK₂[Fe(CN)₆], LiK₂[Fe(CN)₆] oder (NH₄)K₂[Fe(CN)₆] und deren Hydrate und Gemische. Besonders bevorzugt werden Alkalimetallhexacyanoferrate (II) eingesetzt. Ganz besonders bevorzugt wird Kaliumhexacyanoferrat (II) oder Natriumhexacyanoferrat (II) und deren Hydrate oder Gemische dieser Verbindungen eingesetzt.

Es handelt es sich bevorzugt um Cobalthexacyanoferrat(II)komplexe.

Die erfindungsgemäßen Ionenaustauscher enthalten vorzugsweise zwischen 0,1 und 15 Gew. % an Cobalt bezogen auf das Trockengewicht des Ionenaustauschers. Besonders bevorzugt enthalten die erfindungsgemäßen Ionenaustauscher zwischen 0,5 Gew. % und 10 Gew. % an Cobalt bezogen auf das Trockengewicht des Ionenaustauschers. Die erfindungsgemäßen lonenaustauscher enthalten vorzugsweise zwischen 0,1 und 15 Gew. % Eisen bezogen auf das Trockengewicht des Ionenaustauschers. Besonders bevorzugt enthalten die erfindungsgemäßen Ionenaustauscher zwischen 0,5 Gew. % und 10 Gew. % Eisen bezogen das Trockengewicht des Ionenaustauschers . Das Stoffmengenverhältnis Cobalt zu Eisen liegt im erfindungsgemäßen Ionenaustauscher bevorzugt zwischen 10 : 1 und 1 : 10. Besonders bevorzugt liegt das Stoffmengenverhältnis Cobalt zu Eisen zwischen 2 : 1 und 1 : 2. Von der Erfindung ist ein Verfahren zur Herstellung der erfindungsgemäßen Ionenaustauscher umfasst, bei dem ein Ionenaustauscher enthaltend Polymer mit funktionellen Gruppen der Formel (I) 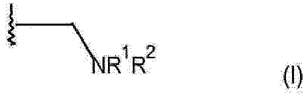
wobei 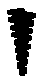 ein Polystyrol Copolymergerüst darstellt und
R¹ und R² gleich oder verschieden sein können und unabhängig voneinander für C₁-C₆-Alkyl oder H stehen, in Gegenwart von mindestens einem Cobaltsalz und in Gegenwart mindestens eines Alkalimetall- oder Ammoniumhexacyanoferrat_in einem wässrigen Medium umgesetzt wird.

Von der Erfindung ist zudem ein Verfahren zur Herstellung der erfindungsgemäßen lonenaustauscher umfasst, bei dem in einem Schritt 1.) ein Ionenaustauscher enthaltend Polymer mit funktionellen Gruppen der Formel (I) 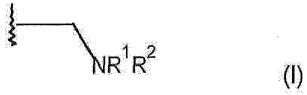
wobei 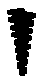 ein Polystyrol-Copolymergerüst darstellt und
R¹ und R² gleich oder verschieden sein können und unabhängig voneinander für C₁-C₆-Alkyl oder H stehen mit mindestens einem Übergangsmetallsalz in einem wässrigen Medium in Kontakt gebracht wird und in einem Schritt 2.) der übergangsmetallbeladene Ionenaustauscher aus Schritt 1.) mit mindestens einem Alkalimetall- oder Ammoniumhexacyanoferrat_in einem wässrigen Medium umgesetzt wird.

Beispielweise und vorzugsweise können als Cobaltsalze alle Salze organischer oder anorganischer Säuren, wie z.B. und vorzugsweise Schwefelsäure, Salpetersäure, Salzsäure, Flusssäure, Bromwasserstoffsäure, Oxalsäure, Essigsäure und Phosphorsäure, wie insbesondere Sulfate, Phosphate, Fluoride, Chloride, Bromide, Oxalate, Acetate oder Nitrate eingesetzt werden. Vorzugsweise wird Cobalt(II)sulfat, Cobalt(II)chlorid, Cobalt(II)bromid, Cobalt(III)sulfat, Cobalt(III)chlorid, Cobalt(III)bromid, Cobalt(II)nitrat oder Cobalt(III)nitrat oder deren Hydrate oder Gemische dieser eingesetzt. Besonders bevorzugt wird Cobalt(II)chlorid Hexahydrat, Cobalt(II)sulfat Heptahydrat und Cobalt(II)nitrat Heptahydrat eingesetzt.

Als Alkalimetall- und Ammoniumhexacyanoferrate können beispielsweise Alkalimetall- und Ammoniumhexacyanoferrate (II) und (III) und auch Mischungen verschiedener Alkalimetalhexacyanoferrate (II) und (III) und/oder Ammoniumhexacyanoferrate (II) und (III) eingesetzt werden. Beispielsweise und vorzugsweise sind als Alkalimetall- und Ammoniumhexacyanoferrate genannt K₃[Fe(CN)₆], K₄[Fe(CN)₆], Na₃[Fe(CN)₆], Na₄[Fe(CN)ₑ], Na₂,K₂[Fe(CN)₆], Li₃[Fe(CN)ₑ], Li₄[Fe(CN)₆], Li₂(NH₄)₂[Fe(CN)₆] Na₃,K[Fe(CN)₆], (NH₄)₃[Fe(CN)₆], (NH₄)₄[Fe(CN)₆], Na,K₂[Fe(CN)₆], Li,K₂[Fe(CN)₆] oder (NH₄)K₂[Fe(CN)₆] und deren Hydrate und Gemische. Besonders bevorzugt werden Alkalimetallhexacyanoferrate (II) eingesetzt. Ganz besonders bevorzugt wird Kaliumhexacyanoferrat (II) und Natriumhexacyanoferrat (II) und deren Hydrate oder Gemische dieser Verbindungen eingesetzt.

Wässriges Medium stellt im Sinne der Erfindung eine Mischung aus Wasser und gegebenenfalls weiterer organischer aromatischer oder aliphatischer Lösungsmitteln dar. Bevorzugt weist das wässrige Medium ein Wassergehalt von > 95 Gew. % besonders bevorzugt > 99 Gew. % bezogen auf die Gesamtmenge an wässrigem Medium auf. Ganz besonders bevorzugt wird Wasser mit einer Leitfähigkeit ≤ 1,1 µS/cm gemessen bei 20°C eingesetzt.

Es ist möglich, den Ionenaustauscher enthaltend Polymer mit funktionellen Gruppen der Formel (I) mit dem Cobalthexacyanoferratkomplex in Kontakt zu bringen und den erfindungsgemäßen Ionenaustauscher herzustellen. Im Rahmen dieses Verfahrens werden die Cobaltsalze mit dem Alkalimetall- oder Ammoniumhexacyanoferrat in einem wässrigen Medium in Kontakt gebracht. Dann wird zu dieser Lösung der Ionenaustauscher enthaltend Polymer mit funktionellen Gruppen der Formel (I) hinzugegeben. Im Allgemeinen wird der Ionenaustauscher mit voll entsalztem Wasser nachgewaschen. Er kann aber auch ohne weitere Nachbehandlung eingesetzt werden.

Genauso gut ist es möglich zunächst den Ionenaustauscher enthaltend Polymer mit funktionellen Gruppen der Formel (I) zunächst in einem Schritt 1.) mit mindestens einem Alkalimetallhexacyanoferrat oder/und dem Ammoniumhexacyanoferrat in Kontakt zu bringen und dann in einem Schritt 2.) diesen modifizierten Ionenaustauscher mit mindestens einem Cobaltsalz umzusetzen. Im Allgemeinen wird der Ionenaustauscher mit voll entsalztem Wasser nachgewaschen. Er kann aber auch ohne weitere Nachbehandlung eingesetzt werden.

Ebenso ist es möglich, den Ionenaustauscher enthaltend Polymer mit funktionellen Gruppen der Formel (I) in einem Schritt 1.) mit mindestens einem Cobaltsalz in einem wässrigen Medium in Kontakt zu bringen und in einem Schritt 2.) den beladenen Ionenaustauscher aus Schritt 1.) mit mindestens einem Alkalimetall- oder Ammoniumhexacyanoferrat in einem wässrigen Medium umzusetzen. Der gemäß Schritt 2.) hergestellte Ionenaustauscher wird im Allgemeinen mit voll entsalztem Wasser ausgewaschen. Er kann aber auch ohne weitere Nachbehandlung eingesetzt werden.

In der Regel kann Schritt 2.) bei unterschiedlichen pH Werten, im alkalischen oder sauren, durchgeführt werden. Es ist aber bevorzugt die Reaktion bei einem pH Wert von 5 bis 8, besonders bevorzugt bei pH 6,5 bis 7,5 durchzuführen.

Bevorzugt erfolgt die Herstellung dadurch, dass der Ionenaustauscher enthaltend Polymer mit funktionellen Gruppen der Formel (I) in einem Schritt 1.) mit mindestens einem Cobaltsalz in einem wässrigen Medium in Kontakt gebracht wird und in einem Schritt 2.) der beladene Ionenaustauscher aus Schritt 1.) mit mindestens einem Alkalimetall- oder Ammoniumhexacyanoferrat in einem wässrigen Medium umgesetzt wird. Bevorzugt wird der Ionenaustauscher dann mit voll entsalztem Wasser ausgewaschen. Die gemäß dieser Verfahren hergestellten Ionenaustauscher sind ebenfalls von der vorliegenden Erfindung mit umfasst.

Die Herstellung der in dem Verfahren eingesetzten Polymeren mit funktionellen Gruppen der Formel (I) erfolgt bevorzugt dadurch, dass man:
a) Monomertröpfchen aus wenigstens einer monovinylaromatischen Verbindung und wenigstens einer polyvinylaromatischen Verbindung und wenigstens einem Initiator zu einem Perlpolymerisat umsetzt,
b) das Perlpolymerisat aus Schritt a) mit Phthalimidderivaten phthalimidomethyliert,
c) das phthalimidomethylierte Perlpolymerisat aus Schritt b) zu aminomethyliertem Perlpolymerisat umsetzt und gegebenenfalls in einem weiteren Schritt
d) das aminomethylierte Perlpolymerisat durch Alkylierung zu Ionenaustauschern enthaltend sekundäre und/oder tertiäre Aminogruppen reagieren lässt.

In Verfahrensschritt a) wird wenigstens eine monovinylaromatische Verbindung und wenigstens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der vorliegenden Erfindung werden in Verfahrensschritt a) bevorzugt Styrol, Vinyltoluol, Ethylstyrol, α-Methylstyrol, Chlorstyrol, oder Chlormethylstyrol eingesetzt.

Insbesondere bevorzugt wird Styrol oder Mischungen aus Styrol mit den vorgenannten Monomeren, bevorzugt mit Ethylstyrol, eingesetzt.

Bevorzugte polyvinylaromatische Verbindungen im Sinne der vorliegenden Erfindung sind für Verfahrensschritt a) Divinylbenzol, Divinyltoluol, Trivinylbenzol, Divinylnaphtalin, oder Trivinylnaphtalin, insbesondere bevorzugt Divinylbenzol.

Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Perlpolymerisats ausgewählt. Im Falle des Einsatzes von Divinylbenzol sind kommerzielle Divinylbenzolqualitäten, die neben den Isomeren des Divinylbenzols auch Ethylvinylbenzol enthalten, ausreichend.

Der Begriff Perlpolymerisat stellt im Sinne der Erfindung ein kugelförmiges, vernetztes Polymerisat dar.

Die Ausbildung makroporöser Perlpolymerisate erfolgt vorzugsweise durch Zusatz von Inertmaterialien, bevorzugt wenigstens eines Porogens, zu der Monomermischung bei der Polymerisation, um im Perlpolymerisat eine makroporöse Struktur zu erzeugen. Insbesonders bevorzugte Porogene sind Hexan, Octan, Isooctan, Isododecan, Methylethylketon, Butanol oder Octanol und deren Isomeren. Es sind vor allem organische Substanzen geeignet, die sich im Monomeren lösen, das Perlpolymerisat aber schlecht lösen bzw. quellen (Fällmittel für Polymere) beispielsweise aliphatische Kohlenwasserstoffe (Farbenfabriken Bayer DBP 1045102 , 1957; DBP 1113570, 1957).

In US 4382124 werden als Porogen die ebenfalls im Rahmen der vorliegenden Erfindung bevorzugt einzusetzenden Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Bevorzugt wird in Verfahrensschritt a) mindestens ein Porogen zugesetzt.

Die gemäß Verfahrensschritt a) hergestellten Perlpolymerisate können in heterodisperser oder monodisperser Form hergestellt werden.

Die Herstellung heterodisperser Perlpolymerisate geschieht nach allgemeinen, dem Fachmann bekannten Verfahren, z.B. mit Hilfe der Suspensionspolymerisation.

Bevorzugt werden monodisperse Perlpolymerisate in Verfahrensschritt a) hergestellt.

In einer bevorzugten Ausführungsform der vorliegenden Erfindung kommen in Verfahrensschritt a) mikroverkapselte Monomertröpfchen bei der Herstellung von monodispersen Perlpolymerisaten zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP 0 046 535 A eingehend beschrieben. Die Methoden der Verkapselung mit synthetischen Polymeren sind bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.

Die heterodispersen oder gegebenenfalls mikroverkapselten, monodispersen Monomertröpfchen enthalten wenigstens einen Initiator oder Mischungen von Initiatoren (Initiatorkombination) zur Auslösung der Polymerisation. Für das erfindungsgemäße Verfahren bevorzugte Initiatoren sind Peroxyverbindungen, insbesondere bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-etylhexan, sowie Azoverbindungen wie 2,2'-Azobis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Das gegebenenfalls, monodisperse, mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Bei der Herstellung von monodispersen Perlpolymerisaten in Verfahrensschritt a) kann die wässrige Phase in einer weiteren bevorzugten Ausführungsform einen gelösten Polymerisationsinhibitor enthalten. Als Inhibitoren kommen in diesem Fall sowohl anorganische als auch organische Stoffe in Frage. Bevorzugte anorganische Inhibitoren sind Stickstoffverbindungen, insbesondere bevorzugt Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere bevorzugte organische Inhibitoren sind stickstoffhaltige Verbindungen. Insbesondere bevorzugt sind Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls mikroverkapselten monodispersen, Monomertröpfchen zum monodispersen Perlpolymerisat erfolgt, gegebenenfalls bzw. bevorzugt in Anwesenheit eines oder mehrerer Schutzkolloide in der wässrigen Phase. Als Schutzkolloide eignen sich natürliche oder synthetische wasserlösliche Polymere, bevorzugt Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Bevorzugt sind ferner Cellulosederivate, insbesondere Celluloseester und Celluloseether, wie Carboxymethylcellulose Methylhydroxyethylcellulose, Methylhydroxypropylcellulose und Hydroxyethylcellulose. Insbesondere bevorzugt ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum monodispersen Perlpolymerisat kann in einer alternativen bevorzugten Ausführungsform in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt beispielsweise 0,5 - 500 mmol/l und vorzugsweise 2,5 - 100 mmol/l.

Die Rührgeschwindigkeit bei der Polymerisation zum monodispersen Perlpolymerisat ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt im Allgemeinen 1 : 0,75 bis 1 : 20, vorzugsweise 1 : 1 bis 1 : 6.

Die Polymerisationstemperatur zum monodispersen Perlpolymerisat richtet sich nach der Zerfallstemperatur des eingesetzten Initiators. Sie liegt im Allgemeinen zwischen 50 bis 180°C, vorzugsweise zwischen 55 und 130°C. Die Polymerisation dauert im Allgemeinen 0,5 bis etwa 20 Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das monodisperse Perlpolymerisat mit üblichen Methoden, beispielsweise durch Filtrieren oder Dekantieren, isoliert und gegebenenfalls gewaschen.

Die Herstellung der monodispersen Perlpolymerisate mit Hilfe des Jetting Prinzipes oder des Seed-Feed-Prinzip ist aus dem Stand der Technik bekannt und z.B. in US-A 4 444 961, EP-A 0 046 535, US 4 419 245 oder WO 93/12167 beschrieben.

Bevorzugt erfolgt die Herstellung der monodispersen Perlpolymerisate mit Hilfe des Jetting Prinzipes oder des Seed-Feed-Prinzip.

Bevorzugt wird in Verfahrensschritt a) ein makroporöses, monodisperses Perlpolymerisat hergestellt.

Im Verfahrensschritt b) wird bevorzugt zunächst das Amidomethylierungsreagens hergestellt. Dazu wird beispielsweise ein Phthalimid oder ein Phthalimidderivat in einem Lösungsmittel gelöst und mit Formalin versetzt. Anschließend wird unter Wasserabspaltung hieraus ein Bis(phthalimido)ether gebildet. Bevorzugte Phthalimidderivate im Sinne der vorliegenden Erfindung sind Phthalimid selber oder substituierte Phthalimide, beispielsweise Methylphthalimid. In Verfahrensschritt b.) könnte aber ebenfalls das Phthalimidderivat bzw. das Phthalimid in Gegenwart von Paraformaldehyd mit dem Perlpolymerisat aus Schritt a.) umgesetzt werden.

Im Allgemeinen liegt das molare Verhältnis der Phthalimiderivate zu den Perlpolymerisaten im Verfahrensschritt b) bei 0,15:1 bis 1,7:1, wobei auch andere Stoffmengenverhältnisse gewählt werden können. Bevorzugt wird das Phthalimidderivat in einem Stoffmengenverhältnis von 0,7:1 bis 1,45:1 in Verfahrensschritt b) eingesetzt.

Formalin wird üblicherweise bezogen auf das Phthalimidderivat im Überschuß eingesetzt, es können aber auch andere Mengen eingesetzt werden. Bevorzugt wird pro mol Phthalimidderivat 1,01 bis 1,2 mol Formalin eingesetzt.

Im Allgemeinen kommen im Verfahrensschritt b) inerte Lösungsmittel zum Einsatz, die geeignet sind, das Polymer zu quellen, bevorzugt chlorierte Kohlenwasserstoffe, besonders bevorzugt Dichlorethan oder Methylenchlorid. Es sind aber auch Verfahren denkbar, die ohne Einsatz von Lösungsmitteln durchführbar sind.

Im Verfahrensschritt b) wird das Perlpolymerisat mit Phthalimidderivaten kondensiert. Als Katalysator wird hierbei Oleum, Schwefelsäure oder Schwefeltrioxid eingesetzt, um daraus ein SO₃-Addukt des Phthalimidderivats im inerten Lösungsmittel herzustellen.

Im Verfahrensschritt b) wird üblicherweise der Katalysator im Unterschuss zum Phthalimidderivat zugesetzt, wenn gleich auch größere Mengen verwendet werden können. Bevorzugt liegt das molare Verhältnis des Katalysators zu den Phthalimidderivaten zwischen 0,1 : 1 und 0,45 : 1 . Besonders bevorzugt liegt das molare Verhältnis des Katalysators zu den Phthalimidderivaten zwischen 0,2 : 1 und 0,4 : 1.

Verfahrensschritt b) wird bei Temperaturen zwischen 20 bis 120°C, bevorzugt 50 bis 100°C, besonders bevorzugt 60 bis 90°C durchgeführt.

Die Abspaltung des Phthalsäurerestes und damit die Freilegung der Aminomethylgruppe erfolgt im Verfahrensschritt c) durch Behandeln des phthalimidomethylierten vernetzten Perlpolymerisates mit wässrigen oder alkoholischen Lösungen eines Alkalihydroxids, wie Natriumhydroxid oder Kaliumhydroxid bei Temperaturen zwischen 100 und 250°C, vorzugsweise 120 -190°C. Die Konzentration der Natronlauge liegt im Allgemeinen im Bereich von 10 bis 50 Gew.-%, vorzugsweise 20 bis 40 Gew.-%. Dieses Verfahren ermöglicht die Herstellung aminoalkylgruppenhaltiger Perlpolymerisate.

Das dabei entstehende aminomethylierte Perlpolymerisat wird im Allgemeinen mit voll entsalztem Wasser alkalifrei gewaschen. Es kann aber auch ohne Nachbehandlung eingesetzt werden.

Das aminomethylierte Perlpolymerisat aus Schritt c.) stellt bereits einen schwach basischen Anionenaustauscher dar und kann als solcher eingesetzt werden. Daher ist der Verfahrensschritt d.) optional. Bevorzugt wird aber ein weiterer Verfahrensschritt d.) eingesetzt, bei dem das aminomethylierte Perlpolymerisat alkyliert wird.

Im Verfahrensschritt d) erfolgt die Herstellung von schwach basischen Anionenaustauschern durch Umsetzung des aminomethylierten Perlpolymerisates aus Schritt c.) mit Alkylierungsmitteln.

Bevorzugte Alkylierungsmittel im Sinne der vorliegenden Erfindung sind Alkylhalogenide, Halogenalkohole, Alkylsulfate, Dialkylsulfate, Alkyloxide, Leuckart-Wallach-Reagenzien, wie z.B. und vorzugsweise Formaldehyd / Ameisensäuregemische oder Kombinationen dieser Alkylierungsmittel untereinander bzw. nacheinander.

Besonders bevorzugt werden Chlormethan, Ethylenoxid, Propylenoxid sowie die Leuckert-Wallach-Reagenzien, wie z.B. und vorzugsweise Formaldehyd / Ameisensäuregemische, oder deren Kombination eingesetzt. Beispielhaft werden Leuckart-Wallach-Reagenzien in Organikum, VEB Deutscher Verlag der Wissenschaften, Berlin 1968, 8. Auflage, Seite 479 beschrieben.

Bezogen auf die molare Menge an Stickstoff, die in den in Verfahrensschritt c.) hergestellten aminomethylierten Perlpolymerisate enthalten ist wird im Allgemeinen und vorzugsweise zwischen 0,1 bis 6 mol an Alkylierungsmitteln, besonders bevorzugt zwischen 1 mol und 4 mol, in Verfahrensschritt d.) eingesetzt. Ganz besonders bevorzugt wird zwischen 1 mol und 2 mol an Alkylierungsmitteln in Verfahrensschritt c.) bezogen auf die molare Menge an Stickstoff, die in den in Verfahrensschritt c.) hergestellten aminomethylierten Perlpolymerisate enthalten ist, in Verfahrensschritt d.) eingesetzt.

Als Suspensionsmedium werden üblicherweise Wasser oder Mineralsäuren eingesetzt. Gegebenenfalls können aber auch in Abhängigkeit des gewünschten Produktes Basen zugesetzt werden. Bevorzugt wird Wasser eingesetzt. Als Basen kommen gegebenenfalls Natronlauge, Kalilauge oder basische, jedoch nicht nucleophile Amine in Frage.

Der Verfahrensschritt d) wird im Allgemeinen und vorzugsweise bei Temperaturen von 20 bis 150°C, bevorzugt bei Temperaturen von 40 bis 110°C. Verfahrensschritt d) wird bei Drücken von Normaldruck bis 6 bar gemessen bei 20°C, bevorzugt bei Normaldruck bis 4 bar gemessen bei 20°C durchgeführt.

Das in den Schritten a.) bis c.) beschriebene Verfahren ist als Phthalimidverfahren bekannt. Neben dem Phthalimidverfahren besteht ebenfalls die Möglichkeit mit Hilfe des Chlormethylierungsverfahrens ein aminomethyliertes Perlpolymerisat herzustellen. Nach dem Chlormethylierungsverfahren, das z.B. in der EP-A 1 568 660 beschrieben wird, werden zunächst Perlpolymerisate - meist auf Styrol/Divinylbenzol Basis - hergestellt, chlormethyliert und anschließend mit Aminen umgesetzt (Helfferich, Ionenaustauscher, Seite 46 -58 , Verlag Chemie, Weinheim, 1959) sowie EP-A 0 481 603). Der Ionenaustauscher enthaltend Polymer mit funktionellen Gruppen der Formel (I) kann nach dem Phthalimidverfahren oder dem Chlormethylierungsverfahren hergestellt werden. Bevorzugt erfolgt die Herstellung des erfindungsgemäßen Ionnenaustauschers nach dem Phthalimidverfahren, gemäß Verfahrensschritte a.) bis c.), der dann gegebenenfalls gemäß Schritt d.) alkyliert wird, um einen schwach basischen Anionenaustauscher mit sekundären und/oder tertiären Aminogruppen zu erzeugen.

Falls das aminomethylierte Perlpolymerisat gemäß Schritt d.) alkyliert wird, entsteht bevorzugt ein Ionenaustauscher, bei dem die funktionellen Gruppen der Formel (I) tertiäre Aminogruppen darstellen. In diesem Fall sind R¹ und R² bevorzugt C₁-C₆-Alkyl, besonders bevorzugt Methyl. Im allgemeinen enthält dieser lonenaustauscher dann noch sekundäre und primäre Aminogruppen in einer geringeren Menge. Der Substitutionsgrad der Ionenaustauscher mit Polymeren mit funktionellen Gruppen der Formel (I) gibt das Verhältnis zwischen nicht-substituierten und alkylierten Aminogruppen an. Der Substitutionsgrad kann daher zwischen 0 und 2 liegen. Bei einem Substitutionsgrad von 0 würde keine Alkylierung stattgefunden sein und die funktionellen Gruppen der Formel (I) würden als primäre Aminogruppen vorliegen. Bei einem Substitutionsgrad von 2 würden sämtliche Aminogruppen dialkyliert vorliegen. Der Substitutionsgrad des erfindungsgemäßen Ionenaustauschers liegt im Allgemeinen und vorzugsweise zwischen 0 und 2, bevorzugt zwischen 1 und 2 und ganz bevorzugt zwischen 1,1 und 1,6.

Bevorzugt sind daher Ionenaustauscher enthaltend Polymere mit funktionellen Gruppen der Formel (I) mit einem Substitutionsgrad von 1,1 bis 1,6 und zumindest einem Cobalthexacyanoferrat(II)komplex.

Es ist bekannt, dass Polymere mit funktionellen Gruppen der Formel (I) Ionenaustauscher sind und schwach basischen Anionenaustauscher darstellen. Diese Ionenaustauscher werden zu dem erfindungsgemäßen Ionenaustauscher bevorzugt durch Be-Beladung mit zweiwertigen oder dreiwertigen Cobaltsalzen in einem wässrigen Medium und in einem weiteren Schritt durch Umsetzung mit mindestens einem Alkalimetallhexacyanoferrat(II).

Daher ist von der Erfindung ebenfalls ein Herstellungsverfahren umfasst, bei dem
a) Monomertröpfchen aus wenigstens einer monovinylaromatischen Verbindung und wenigstens einer polyvinylaromatischen Verbindung und wenigstens einem Initiator zu einem Perlpolymerisat umgesetzt werden,
b) das Perlpolymerisat aus Schritt a) mit Phthalimidderivaten phthalimidomethyliert wird,
c) das phthalimidomethylierte Perlpolymerisat aus Schritt b) zu aminomethyliertem Perlpolymerisat umgesetzt wird und gegebenenfalls
d) das aminomethylierte Perlpolymerisat durch Alkylierung zu Ionenaustauschern mit sekundären und /oder tertiären Aminogruppen reagiert und
e) der Ionenaustauscher aus Schritt c.) oder Schritt d.) mit mindestens einem zweiwertigen oder dreiwertigen Cobaltsalz in einem wässrigen Medium beladen wird und
f) der cobalthaltige Ionenaustauscher aus Schritt e.) mit mindestens einem Alkalimetall- oder Ammoniumhexacyanoferrat umgesetzt wird.

Bevorzugt erfolgt die Umsetzung in Schritt e.) mit einem zweiwertigen Cobaltsalz. Ganz besonders bevorzugt erfolgt die Umsetzung in Schritt e.) mit Cobalt(II)sulfat
Bevorzugt erfolgt die Umsetzung in Schritt f.) mit einem Alkalimetallhexacyanoferrat(II). Besonders bevorzugt erfolgt die Umsetzung in Schritt f.) mit einem Alkalimetallhexacyanoferrat (II). Ganz besonders bevorzugt erfolgt die Umsetzung in Schritt f.) mit Kaliumhexacyanoferrat (II).

Im Allgemeinen und vorzugsweise liegt die Stoffmenge an eingesetztem Cobaltsalz pro Gramm Perlpolymerisat (Trockengewicht) in Schritt d.) zwischen 10⁻⁵ mol und 0,5 mol. Besonders bevorzugt liegt die Stoffmenge an eingesetztem Übergangsmetalsalz pro Gramm Perlpolymerisat (Trockengewicht) in Schritt d) zwischen 10⁻³ mol und 0,3 mol.

Im Allgemeinen und vorzugsweise liegt das Stoffmengenverhältnis an eingesetztem Alkali- und Ammoniumhexacyanoferrat zu dem Cobaltsalz zwischen 10 : 1 und 1 : 10. Besonders bevorzugt liegt das Stoffmengenverhältnis an eingesetztem Alkali- und Ammoniumhexacyanoferrat zu dem Cobaltsalz zwischen 2 : 1 und 1 : 2.

Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

Die erfindungsgemäß hergestellten Ionenaustauscher eignen sich für die Adsorption von Caesiumionen. Daher ist von der Erfindung ebenfalls die Verwendung der erfindungsgemäßen Ionenaustauscher zur Entfernung und Aufreinigung von Caesiumionen umfasst. Die Erfindung betrifft ebenfalls die Verwendung des erfindungsgemäßen Ionenaustauschers zur Entfernung von Caesiumionen aus Abwasser und Kühlwasser.

Die erfindungsgemäßen Ionenaustauscher eignen sich zur Adsorption von Caesiumionen und weisen eine hohe Caesiumkapazität auf. Zudem sind die erfindungsgemäßen Ionenaustauscher sehr stabil und halten hohe mechanische Belastungen aus. Daher weisen sie ebenfalls die für industrielle Prozesse notwendige Abriebstabilität auf.

Die nachfolgenden Beispiele dienen nur der Beschreibung der Erfindung und sollen diese nicht beschränken.

### Beispiele

### Beispiel 1

### 1a) Herstellung eines monodispersen, makroporösen Perlpolymerisates auf der Basis von Styrol, Divinylbenzol und Ethylstyrol

In einem 10 I Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g mikroverkapselter Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit enger Teilchengrößenverteilung und glatter Oberfläche.

Das Polymerisat ist in der Aufsicht kreidig weiß und weist eine Schüttdichte von ca. 370 g/l auf.

### 1b) Herstellung eines amidomethylierten Perlpolymerisates

Bei Raumtemperatur werden 2218 ml Dichlorethan, 823 g Phthalimid und 569 g 30 gew.-%iges Formalin vorgelegt. Der pH-Wert der Suspension wird mit Natronlauge auf 5,5 bis 6 eingestellt. Anschließend wird das Wasser destillativ entfernt. Dann werden 60,4 g Schwefelsäure zudosiert. Das entstehende Wasser wird destillativ entfernt. Der Ansatz wird abgekühlt. Bei 30°C werden 255 g 65 %iges Oleum und anschließend 424 g monodisperses Perlpolymerisat, hergestellt nach Verfahrensschritt 1a) eindosiert. Die Suspension wird auf 70°C erhitzt und weitere 6 Stunden bei dieser Temperatur gerührt. Die Reaktionsbrühe wird abgezogen, voll entsalztes Wasser wird hinzudosiert und Restmengen an Dichlorethan werden destillativ entfernt.
Ausbeute an amidomethyliertem Perlpolymerisat : 2580 ml

### 1c) Herstellung eines aminomethylierten Perlpolymerisates

Zu 2545 ml amidomethyliertem Perlpolymerisat aus 1b) werden 1454 g 50 gew.-%ige Natronlauge und 1340 ml vollentsalztes Wasser bei Raumtemperatur zudosiert. Die Suspension wird in 2 Stunden auf 180°C erhitzt und 8 Stunden bei dieser Temperatur gerührt. Das erhaltene Perlpolymerisat wird mit vollentsalztem Wasser gewaschen.
Ausbeute an aminomethyliertem Perlpolymerisat : 2155 ml
Bestimmung der Menge an basischen Gruppen : 2,41 mol/ Liter Harz

### 1d) Herstellung eines Perlpolymerisates mit tertiären Aminogruppen

In einem Reaktor werden 450 ml voll entsalztes Wasser, 900 ml aminomethyliertes Perlpolymerisat aus 1c) und 270 g 30 gew.%ige Formalinlösung bei Raumtemperatur vorgelegt. Die Suspension wird auf 40°C erwärmt. Der pH Wert der Suspension wird durch Dosierung von 85 gew.-%iger Ameisensäure auf pH 3 eingestellt. Innerhalb von 2 Stunden wird die Suspension auf Rückflusstemperatur (97°C) erwärmt. Während dieser Zeit wird der pH-Wert durch Dosierung von Ameisensäure bei 3,0 gehalten. Nach Erreichen der Rückflusstemperatur wird der pH-Wert zunächst durch Dosierung von Ameisensäure, dann durch Dosierung von 50 gew.%iger Schwefelsäure pH-Wert auf 2 eingestellt. Es wird 30 Minuten bei pH 2 nachgerührt. Dann wird weiter 50 gew.-%ige Schwefelsäure dosiert und der pH-Wert auf 1 eingestellt. Bei pH 1 und Rückflusstemperatur wird weitere 10 Stunden gerührt.

Der Ansatz wird abgekühlt, das Harz auf einem Sieb abfiltriert, mit voll entsalztem Wasser gewaschen und anschließend werden über das Harz 2500 ml 4 gew. % ige wässrige Natronlauge filtriert. Anschließend wird mit Wasser gewaschen.
Volumenausbeute : 965 ml
Bestimmung der Menge an basischen Gruppen : 2,22 mol/ Liter Harz
Der Substitutionsgrad beträgt 1,3.

### Beispiel 2

### Herstellung eines Caesium-selektiven Ionenaustauschers auf Basis eines aminomethylierten Perlpolymerisates

19,7 g (0,07 mol) Cobalt(II)-sulfat Heptahydrat werden in 350 ml vollentsalztem Wasser gelöst. Anschließend werden unter Rühren 350 ml aminomethyliertes Perlpolymerisat (0,625 mol) aus Beispiel 1d) zugegeben und 1 h bei Raumtemperatur gerührt. Anschließend wird innerhalb von einer Stunde eine Lösung aus 44,4 g (0,105 mol) Kaliumhexacyanoferrat(II)-Trihydrat in 350 ml vollentsalztem Wasser zugegeben. Mit 78%-iger Schwefelsäure wird auf pH=7 eingestellt und die Suspension für 7 h bei pH= 7 gerührt.

Die Suspension wird auf ein Sieb gegeben, man lässt die verbliebene Reaktionslösung ablaufen und wäscht den Ionenaustauscher auf dem Sieb mit voll entsalztem Wasser aus.
Ausbeute : 375 ml
Cobaltgehalt: 3,8 Gew. % (Trockengewicht)
Eisengehalt : 5,5 Gew. % (Trockengewicht)

### Vergleichsbeispiel 1

### (Einsatz eines stark basischen Anionenaustauschers mit quartären Ammoniumgruppen)

Herstellung eines Caesium-selektiven Ionenaustauschers auf Basis eines quaternierten aminomethylierten Perlpolymerisates
44,4 g (0,105 mol) Kaliumhexacyanoferrat(II)-Trihydrat werden in 350 ml Wasser gelöst. Anschließend werden unter Rühren 521 ml eines stark basischen Anionenaustauschers (0,625 mol) zugegeben und 5 h bei Raumtemperatur gerüttelt. Die Suspension wird auf ein Sieb gegeben, man lässt die verbliebene Reaktionslösung ablaufen und wäscht den Ionenaustauscher auf dem Sieb mit voll entsalztem Wasser aus. Das Harz wird anschließend in eine Lösung von 19,7 g (0,07 mol) Cobalt(II)-sulfat Heptahydrat in 350 ml Edelwasser gegeben und 24 h bei Raumtemperatur gerüttelt. Die Suspension wird auf ein Sieb gegeben, man lässt die verbliebene Reaktionslösung ablaufen und wäscht den Ionenaustauscher auf dem Sieb mit voll entsalztem Wasser aus.
Ausbeute : 470 ml
Cobaltgehalt: 2,1 Gew. % (Trockengewicht)
Eisengehalt : 2,9 Gew. % (Trockengewicht)

### Vergleichsbeispiel 2

### (Einsatz eines schwach basischen Anionenaustauschers mit tertiären Amingruppen)

Herstellung eines Caesium-selektiven Ionenaustauschers auf Basis eines schwach basischen, heterodispersen Anionenaustauschers mit tertiären Amingruppen (IRA 96)
11,2 g (0,04 mol) Cobalt(II)-sulfat Heptahydrat werden in 200 ml vollentsalztem Wasser gelöst. Anschließend werden unter Rühren 200 ml IRA 96 (0,28 mol) zugegeben und 1 h bei Raumtemperatur gerührt. Anschließend wird innerhalb von einer Stunde eine Lösung aus 25,3 g (0,06 mol) Kaliumhexacyanoferrat(II)-Trihydrat in 200 ml vollentsalztem Wasser zugegeben. Mit 50%-iger Schwefelsäure wird auf pH=7 eingestellt und die Suspension für 5 h bei pH= 7 gerührt.

Die Suspension wird auf ein Sieb gegeben, man lässt die verbliebene Reaktionslösung ablaufen und wäscht den Ionenaustauscher auf dem Sieb mit voll entsalztem Wasser aus.
Ausbeute : 210 ml
Cobaltgehalt: 0,75 Gew. % (Trockengewicht)
Eisengehalt : 3,4 Gew. % (Trockengewicht)

### Beispiel 3 Bestimmung der Aufnahmefähigkeit für Caesium

Zur Herstellung einer Cs-Stammlösung werden 139,4 mg CsCI (22mg/l Caesium), 276,6 mg CaCl₂ (20 mg/l Calcium) und 200 g NaCl (40 g/l Kochsalz) in 5 l VE-Wasser gelöst, der pH-Wert wird dabei mit Natronlauge auf pH= 7 eingestellt.

Es werden jeweils 500 mg des vorsichtig trocken getupften Harzes in 800 ml der oben angesetzten Stammlösung gegeben. Das Gemisch wird 24 h bei Raumtemperatur und einer Geschwindigkeit von 130 RPM geschüttelt. Anschließend wird die Caesiumkonzentration in der Lösung mittels Atomabsorptionsspektroskopie (AAS) ermittelt.

**Tabelle 1:**

| **Harz** | **Anfangskonzentration Cs [mg/l]** | **Endkonzentration Cs [mg/l]** | **Abscheidung [%]** |
|---|---|---|---|
| Beispiel 2 | 22 | 0,6 | 97 |
| Vergleichsbeispiel 1 | 22 | 7,8 | 65 |

Aus den Ergebnissen der Tabelle 1 wird deutlich, dass die erfindungsgemäßen Harze eine bis zu 32 % höhere Aufnahmekapazität an Caesiumionen haben als stark basische Anionenaustauscher mit quartären Ammoniumgruppen, wie sie z.B. aus Journal of Hazardous Materials, 2009, Vol. 166, S. 1148 - 1153 bekannt sind.

Zudem wird aus dem Vergleichsbeispiel 2 deutlich, dass schwach basische tertiäre Anionenaustauscher mit einem Substitutionsgrad über 85 %, die mit Hilfe des Chlormethylierungsverfahren hergestellt wurden, wie z.B. das IRA 96, Cobalt (II)-lonen nur in geringen Mengen aufnehmen. Im Vergleich dazu werden durch das erfindungsgemäße Harz fast 5 mal mehr Cobalt(II) - Ionen aufgenommen.

### Untersuchungsmethoden

### Bestimmung der Menge an basischen Gruppen

100 ml des aminomethylierten Perlpolymerisates werden auf dem Stampfvolumeter eingerüttelt und anschließend mit vollentsalztem Wasser in eine Glassäule gespült. In 1 Stunde und 40 Minuten werden 1000 ml 2 gew.-%ige Natronlauge überfiltriert. Anschließend wird vollentsalztes Wasser überfiltriert bis 100 ml Eluat mit Phenolphthalein versetzt einen Verbrauch an 0,1 N (0,1 normaler) Salzsäure von höchstens 0,05 ml haben.

50 ml dieses Harzes werden in einem Becherglas mit 50 ml vollentsalztem Wasser und 100 ml 1 N Salzsäure versetzt. Die Suspension wird 30 Minuten gerührt und anschließend in eine Glassäule gefüllt. Die Flüssigkeit wird abgelassen. Es werden weitere 100 ml 1 N Salzsäure über das Harz in 20 Minuten filtriert. Anschließend werden 200 ml Methanol überfiltriert. Alle Eluate werden gesammelt und vereinigt und mit 1 N Natronlauge gegen Methylorange titriert.

Die Menge an Aminomethylgruppen in 1 Liter aminomethyliertem Harz errechnet sich nach folgender Formel: (200 - V) · 20 = mol Aminomethylgruppen pro Liter Harz, worin V für Volumen der bei der Titration verbrauchten 1 N Natronlauge steht.

## Patentansprüche

1. Ionenaustauscher enthaltend Polymere mit funktionellen Gruppen der Formel (I) 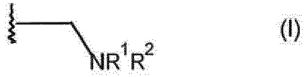
wobei 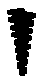 ein Polystyrol Copolymergerüst darstellt und
R¹ und R² gleich oder verschieden sein können und unabhängig voneinander für C₁-C₆-Alkyl oder H stehen
und zumindest einen Cobalthexacyanoferratkomplex.

2. Ionenaustauscher gemäß Anspruch 1, **dadurch gekennzeichnet, dass** der Ionenaustauscher Cobalt in einer Menge zwischen 0,5 Gew. % und 10 Gew.% bezogen auf das Trockengewicht des Ionenaustauschers enthält.

3. Ionenaustauscher gemäß Anspruch 1 oder 2, **dadurch gekennzeichnet, dass** der Eisengehalt zwischen 0,5 Gew. % und 10 Gew.% bezogen auf das Trockengewicht des Ionenaustauschers beträgt.

4. Ionenaustauscher gemäß einem oder mehreren der Ansprüche 1 bis 3, **dadurch gekennzeichnet, dass** R¹ und R² gleich oder verschieden sein können und unabhängig voneinander für Methyl und/oder Ethyl stehen.

5. Ionenaustauscher gemäß einem oder mehreren der Ansprüche 1 bis 4, **dadurch gekennzeichnet, dass** das Polymergerüst ein Styrol / Divinylbenzol vernetztes Copolymer darstellt.

6. Ionenaustauscher gemäß einem oder mehreren der Ansprüche 1 bis 5, **dadurch gekennzeichnet, dass** das Polymer des Ionenaustauschers makroporös ist.

7. Ionenaustauscher gemäß einem oder mehreren der Ansprüche 1 bis 6, **dadurch gekennzeichnet, dass** der Substitutionsgrad 1,1 bis 1,6 beträgt.

8. Ionenaustauscher gemäß einem oder mehreren der Ansprüche 1 bis 7, **dadurch gekennzeichnet, dass** der Cobalthexacyanoferratkomplex Cobalthexacyanoferrat(II)komplex ist.

9. Verfahren zur Herstellung der erfindungsgemäßen Ionenaustauscher, bei dem ein Ionenaustauscher enthaltend Polymer mit funktionellen Gruppen der Formel (I) 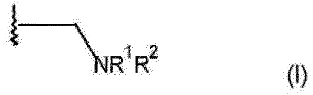
wobei 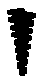 ein Polystyrol Copolymergerüst darstellt und
R¹ und R² gleich oder verschieden sein können und unabhängig voneinander für C₁-C₆-Alkyl oder H stehen, in Gegenwart von mindestens einem Cobaltsalz und in Gegenwart mindestens eines Alkalimetall- oder Ammoniumhexacyanoferrat in einem wässrigen Medium umgesetzt wird.

10. Verfahren zur Herstellung des Ionenaustauschers gemäß Anspruch 9, **dadurch gekennzeichnet, dass** man den eingesetzten Ionenaustauscher, enthaltend funktionelle Gruppen der Formel (I), wie folgt herstellt:
a) Monomertröpfchen aus wenigstens einer monovinylaromatischen Verbindung und wenigstens einer polyvinylaromatischen Verbindung und wenigstens einem Initiator zu einem Perlpolymerisat umsetzt,
b) das Perlpolymerisat aus Schritt a) mit Phthalimidderivaten phthalimidomethyliert,
c) das phthalimidomethylierte Perlpolymerisat aus Schritt b) zu aminomethyliertem Perlpolymerisat umsetzt und gegebenenfalls
d) das aminomethylierte Perlpolymerisat durch Alkylierung zu Ionenaustauschern mit sekundären und/oder tertiären Aminogruppen reagieren lässt und
e) der Ionenaustauscher aus Schritt c.) oder Schritt d.) mit mindestens einem zweiwertigen oder dreiwertigen Cobaltsalz in einem wässrigen Medium beladen wird und
f) der cobalthaltige Ionenaustauscher aus Schritt e.) mit mindestens einem Alkalimetall- oder Ammoniumhexacyanoferrat umgesetzt wird.

11. Verfahren zur Herstellung des Ionenaustauschers gemäß Anspruch 9 oder 10, **dadurch gekennzeichnet, dass** als Übergangsmetallsalze in Schritt e) Cobalt(II)sulfat, Cobalt(II)chlorid, Cobalt(II)bromid, Cobalt(III)sulfat, Cobalt(III)chlorid, Cobalt(III)bromid, Cobalt(II)nitrat oder Cobalt(III)nitrat und deren Hydrate und Gemische eingesetzt werden.

12. Verfahren zur Herstellung des Ionenaustauschers gemäß einem oder mehreren der Ansprüche 9 bis 11, **dadurch gekennzeichnet, dass** als Alkalimetallhexacyanoferrat in Schritt f) Kaliumhexacyanoferrat(II), Kaliumhexacyanoferrat(III), Natriumhexacyanoferrat(II) oder Natriumhexacyanoferrat(III) und deren Hydrate und Gemische eingesetzt werden.

13. Verwendung der Ionenaustauscher gemäß Anspruch 1 zur Entfernung und Aufreinigung von Caesiumionen.

## Claims

1. Ion exchanger containing polymers having functional groups of formula (I) 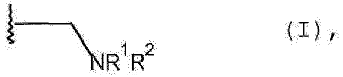
wherein 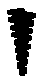 represents a polystyrene copolymer scaffold and
R¹ and R² may be identical or different and independently of one another represent C₁ -C₆-alkyl or H,
and at least one cobalt hexacyanoferrate complex.

2. Ion exchanger according to Claim 1, **characterized in that** the ion exchanger contains cobalt in an amount between 0.5 wt% and 10 wt% based on the dry weight of the ion exchanger.

3. Ion exchanger according to Claim 1 or 2, **characterized in that** the iron content is between 0.5 wt% and 10 wt% based on the dry weight of the ion exchanger.

4. Ion exchanger according to one or more of Claims 1 to 3, **characterized in that** R¹ and R² may be identical or different and independently of one another represent methyl and/or ethyl.

5. Ion exchanger according to one or more of Claims 1 to 4, **characterized in that** the polymer scaffold represents a styrene/divinylbenzene crosslinked copolymer.

6. Ion exchanger according to one or more of Claims 1 to 5, **characterized in that** the polymer of the ion exchanger is macroporous.

7. Ion exchanger according to one or more of Claims 1 to 6, **characterized in that** the degree of substitution is from 1.1 to 1.6.

8. Ion exchanger according to one or more of Claims 1 to 7, **characterized in that** the cobalt hexacyanoferrate complex is cobalt hexacyanoferrate (11) complex.

9. Process for producing the ion exchangers according to the invention, in which an ion exchanger containing polymer having functional groups of formula (I) 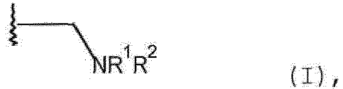
wherein 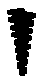 represents a polystyrene copolymer scaffold and
R¹ and R² may be identical or different and independently of one another represent C₁-C₆-alkyl or H, is reacted in the presence of at least one cobalt salt and in the presence of at least one alkali metal or ammonium hexacyanoferrate in an aqueous medium.

10. Process for producing the ion exchanger according to Claim 9, **characterized in that** the employed ion exchanger containing functional groups of formula (I) is produced as follows:
a) converting monomer droplets composed of at least one monovinylaromatic compound and at least one polyvinylaromatic compound and at least one initiator into a bead polymer,
b) phthalimidomethylating the bead polymer from step a.) with phthalimide derivatives,
c) converting the phthalimidomethylated bead polymer from step b.) into an aminomethylated bead polymer and optionally
d) reacting the aminomethylated bead polymer by alkylation to afford ion exchangers having secondary and/or tertiary amino groups and
e) loading the ion exchanger from step c.) or step d.) with at least one divalent or trivalent cobalt salt in an aqueous medium and
f) reacting the cobalt-containing ion exchanger from step e.) with at least one alkali metal or ammonium hexacyanoferrate.

11. Process for producing the ion exchanger according to Claim 9 or 10, **characterized in that** as the transition metal salts in step e) cobalt (II) sulfate, cobalt (II) chloride, cobalt (II) bromide, cobalt (III) sulfate, cobalt (III) chloride, cobalt (III) bromide, cobalt (II) nitrate or cobalt (III) nitrate and hydrates and mixtures thereof are employed.

12. Process for producing the ion exchanger according to one or more of Claims 9 to 11, **characterized in that** as the alkali metal hexacyanoferrate in step f) potassium hexacyanoferrate (II), potassium hexacyanoferrate (III), sodium hexacyanoferrate (II) or sodium hexacyanoferrate (III) and hydrates and mixtures thereof are employed.

13. Use of the ion exchangers according to Claim 1 for removal and purification of cesium ions.

## Revendications

1. Échangeur ionique contenant des polymères présentant des groupes fonctionnels de formule (I) 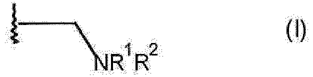 dans laquelle
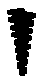 représente une structure copolymère de polystyrène et
R¹ et R² peuvent être identiques ou différents et représentent, indépendamment l'un de l'autre, C₁-C₆-alkyle ou H
et au moins un complexe d'hexacyanoferrate de cobalt.

2. Échangeur ionique selon la revendication 1, **caractérisé en ce que** l'échangeur ionique contient le cobalt en une quantité entre 0,5% en poids et 10% en poids par rapport au poids sec de l'échangeur ionique.

3. Échangeur ionique selon la revendication 1 ou 2, **caractérisé en ce que** la teneur en fer est située entre 0,5% en poids et 10% en poids par rapport au poids sec de l'échangeur ionique.

4. Échangeur ionique selon l'une ou plusieurs des revendications 1 à 3, **caractérisé en ce que** R¹ et R² peuvent être identiques ou différents et représentent, indépendamment l'un de l'autre, méthyle et/ou éthyle.

5. Échangeur ionique selon l'une ou plusieurs des revendications 1 à 4, **caractérisé en ce que** la structure polymère représente un copolymère réticulé de styrène/divinylbenzène.

6. Échangeur ionique selon l'une ou plusieurs des revendications 1 à 5, **caractérisé en ce que** le polymère de l'échangeur ionique est macroporeux.

7. Échangeur ionique selon l'une ou plusieurs des revendications 1 à 6, **caractérisé en ce que** le degré de substitution est de 1,1 à 1,6.

8. Échangeur ionique selon l'une ou plusieurs des revendications 1 à 7, **caractérisé en ce que** le complexe d'hexacyanoferrate de cobalt est du complexe d'hexacyanoferrate (11) de cobalt.

9. Procédé pour la préparation de l'échangeur ionique selon l'invention, dans lequel un échangeur ionique contenant un polymère présentant des groupes fonctionnels de formule (I) 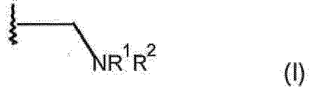 dans laquelle
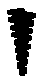 représente une structure copolymère de polystyrène et
R¹ et R² peuvent être identiques ou différents et représentent, indépendamment l'un de l'autre, C₁-C₆-alkyle ou H, est transformé en présence d'au moins un sel de cobalt et en présence d'au moins un hexacyanoferrate de métal alcalin ou d'ammonium dans un milieu aqueux.

10. Procédé pour la préparation de l'échangeur ionique selon la revendication 9, **caractérisé en ce qu'**on prépare l'échangeur ionique utilisé, contenant des groupes fonctionnels de formule (I), comme suit :
a) on transforme des gouttelettes monomères constituées par au moins un composé aromatique monovinylique et au moins un composé aromatique polyvinylique et au moins un initiateur en un polymère en perles,
b) on phtalimidométhyle le polymère en perles de l'étape a) avec des dérivés de phtalimide,
c) on transforme le polymère en perles phtalimidométhylé de l'étape b) en polymère en perles aminométhylé et le cas échéant
d) on laisse réagir le polymère en perles aminométhylé par alkylation en échangeur ionique présentant des groupes amino secondaire et/ou tertiaire et
e) on charge l'échangeur ionique de l'étape c) ou de l'étape d) par au moins un sel de cobalt bivalent ou trivalent dans un milieu aqueux et
f) on transforme l'échangeur ionique contenant du cobalt de l'étape e) avec au moins un hexacyanoferrate de métal alcalin ou d'ammonium.

11. Procédé pour la préparation de l'échangeur ionique selon la revendication 9 ou 10, **caractérisé en ce qu'**on utilise du sulfate de cobalt (II), du chlorure de cobalt (II), du bromure de cobalt (II), du sulfate de cobalt (III), du chlorure de cobalt (III), du bromure de cobalt (III), du nitrate de cobalt (II) ou du nitrate de cobalt (III) et leurs hydrates et mélanges comme sels de métal de transition dans l'étape e) .

12. Procédé pour la préparation de l'échangeur ionique selon l'une ou plusieurs des revendications 9 à 11, **caractérisé en ce qu'**on utilise de l'hexacyanoferrate (II) de potassium, de l'hexacyanoferrate (III) de potassium, de l'hexacyanoferrate (II) de sodium ou de l'hexacyanoferrate (III) de sodium et leurs hydrates et mélanges comme hexacyanoferrate de métal alcalin dans l'étape f).

13. Utilisation de l'échangeur ionique selon la revendication 1 pour l'élimination et la purification d'ions de césium.
